# EUROPÄISCHE PATENTSCHRIFT

(11) **EP 3 516 859 B1**
(45) Veröffentlichungstag und Bekanntmachung des Hinweises auf die Patenterteilung: **18.08.2021**
(21) Anmeldenummer: 17790948.8
(22) Anmeldetag: 21.09.2017
(51) Int. Cl.: H04N 5/225, B60R 11/04, G02B 27/62

(54) **GEHAUSTES KAMERASYSTEM, VERFAHREN UND VORRICHTUNG ZU DESSEN HERSTELLUNG**
HOUSED CAMERA SYSTEM, AND METHOD AND DEVICE FOR PRODUCING SAME
SYSTÈME DE CAMÉRA MONTÉ DANS UN BOÎTIER, PROCÉDÉ ET DISPOSITIF POUR PRODUIRE LEDIT SYSTÈME DE CAMÉRA

(30) Priorität: 21.09.2016 DE 102016117822
(43) Veröffentlichungstag der Anmeldung: 31.07.2019
(73) Patentinhaber: First Sensor Mobility GmbH, 01099 Dresden (DE)
(72) Erfinder: ALBAN, Tino, 01640 Coswig (DE)
(74) Vertreter: Lippert Stachow Patentanwälte Rechtsanwälte Partnerschaft mbB
(86) Internationale Anmeldenummer: PCT/DE2017/100804
(87) Internationale Veröffentlichungsnummer: WO 2018/054426

(56) Entgegenhaltungen:
- EP-A1- 2 600 622
- DE-A1-102004 010 958
- DE-A1-102006 047 695
- KR-A- 20090 122 593

## Beschreibung

Die Erfindung betrifft ein Kamerasystem zur Aufnahme von Bildern der Umgebung des Kamerasystems. Sie betrifft ebenso ein Verfahren und eine Vorrichtung zur Herstellung des Kamerasystems.

Ein solches Kamerasystem umfasst regelmäßig einen Bildsensor und ein Objektiv, welches in einer definierten Lage dem Bildsensor zugeordnet ist. Der Bildsensor ist über geeignete elektrische Verbindungen mit elektronischen Bauteilen verbunden, welche dem Betreiben des Bildsensors dienen. Zum Betreiben zählen je nach Art und Ausstattungsgrad des Bildsensors beispielsweise die Spannungsversorgung, die Signalübertragung für Steuer- und Bildsignale und Bildverarbeitungsprozeduren, die von Kamera zu Kamera unterschiedlich sein können. Bildsensor und Objektiv können in verschiedener Weise von einem Gehäuse umgeben sein, so dass Licht nur durch das Objektiv auf den Bildsensor fällt.

Die mit einem Kamerasystem aus seiner Umgebung gewonnenen Informationen dienen beispielsweise der Steuerung verschiedenster Vorrichtungen, wie Fahrzeuge, Fertigungsmaschinen, Robotern und anderen oder zumindest Komponenten davon. Die je nach Steuerungsprozess notwendigen Bilder werden nacheinander aufgenommen und einer Auswertung zugeführt, so dass die daraus gewonnenen Informationen die Basis bilden für auszuführende Handlungen. Die Auswertbarkeit und der Informationsgehalt der Bilder hängt wesentlich von der Qualität der Bilder ab, wobei die Exaktheit der Lage des Objektivs vor dem Bildsensor einen wesentlichen Anteil hat. Die Lage von Objektiv und Bildsensor relativ zueinander betrifft insbesondere die parallele Ausrichtung der optischen Achsen, auch als Verkippung bezeichnet, dieser beiden hauptsächlichen optischen Komponenten eines Kamerasystems sowie deren Abstand zueinander.

Als "vor" oder "vorn" soll hier jene Seite des Objektivs, des Bildsensors und des Kamerasystems bezeichnet sein, von welcher das Licht auf das Objektiv und nach dieser Passage auf den Bildsensor fällt. "Hinten" oder "rückseitig" ist folglich die gegenüber liegende Seite des Objektivs, des Bildsensors und des Kamerasystems.

Soweit nicht ausdrücklich anders beschrieben soll die Herstellung der exakten Lage von Objektiv und Bildsensor hinsichtlich Verkippung und Abstand entsprechend deren Charakteristika und der Anwendung des Kamerasystems hier als "Positionierung" bezeichnet sein.

In der DE 10 2004 010 958 A1 ist beschrieben, dass die Positionierung eines Bildsensors relativ zur Objektiveinheit erfolgt, indem der Bildsensor in einem Leiterplattenrahmen gehalten und dieser mittels eines Hexapoden und eines Kalibrierfeldes durch dreidimensionale Translation und Rotation ausgerichtet und mittels aushärtbarem Verblockermaterial fixiert wird.

In der EP 2 600 622 A1 wird die Positionierung des Objektivs relativ zum Bildsensor durch die Anordnung des Objektivhalters auf einer Fläche in der Kamera realisiert, welche einen eindeutigen Bezug zur optisch aktiven Fläche des Bildsensors hat. Die Befestigung des Objektivhalters auf der Fläche erfolgt mittels einer Klebefuge. Da der Klebstoff eine gewisse Zeit zum Aushärten benötigt, ist in dieser Phase eine Nachjustierung der Objektivposition möglich.

Jedoch gewährleistet die bekannte Positionierung nicht die gewünschte Präzision bei dem für die industrielle Produktion hoher Stückzahlen gewünschten geringen zeitlichen Aufwand. Nachteilig erweist sich zudem die Verwendung von Klebstoff aufgrund des notwendig präzisen Kleberauftrags und der Aushärtzeit. Weiterhin ist der Klebstoff gezielt auf die zu verbindenden Materialen, die Einsatzbedingungen des Kamerasystems und gegebenenfalls die Lichtdichtheit abzustimmen, um eine unter den jeweiligen Anwendungsbedingungen dauerhafte Klebeverbindung zu erzielen. Insbesondere hohe Temperaturen, mechanische Belastungen und Lichteinwirkung können zu Rissen in der Klebeverbindung führen, so dass Streulicht oder andere Fehler die Bildqualität mindern oder zum Ausfall des Kamerasystems führen können.

In der KR 2009 0122593 A wird beschrieben, dass eine Fixierung des Objektivs im Kameragehäuse schneller erfolgen kann, wenn dazu das Laserschweißen verwendet wird und zu diesem Zweck lasertransparentes und laserabsorbierendes Gehäusematerial eingesetzt wird.

Es besteht daher ein Bedürfnis für ein Kamerasystem, mit welchem die Positionierung einschließlich der Fixierung der eingestellten Relativposition reproduzierbar mit höherer Genauigkeit realisierbar und dauerhaft zu gewährleisten ist. Zudem soll der Positionierungs- und Fixierungsvorgang in die Produktion hoher Stückzahlen integrierbar sein.

Das Kamerasystem und das Herstellungsverfahren sollen dabei an verschiedene Anwendungen und Bildverarbeitungslevel anpassbar sein.

Weiterhin ist es wünschenswert, den Herstellungsprozess, insbesondere hinsichtlich Positionierung von Bildsensor und Objektiv zueinander und Fixierung der Position und die Möglichkeit der Vorfertigung von Komponenten zu verbessern.

Weiterhin besteht der Bedarf nach einer Vorrichtung, mit welcher die verbesserte Positionierung und Fixierung von Bildsensor und Objektiv zueinander ausführbar ist.

Zur erzeugnisseitigen Lösung der Aufgabenstellung wird das Kamerasystem in zwei grundsätzliche Bauteilgruppen, nachfolgend auch als Kameraeinheiten bezeichnet, untergliedert, von denen jede eine der beiden genannten Hauptkomponenten umfasst: die Sensoreinheit mit dem Bildsensor und die Objektiveinheit mit dem Objektiv.

Die Sensoreinheit umfasst neben dem Bildsensor eine Platine und einen Gehäusegrundkörper als ein Gehäusebauteil. Die Platine weist Signal- und Versorgungsleitungen sowie elektronische Bauteile zum Betreiben des Bildsensors auf und ist elektrisch mit dem Bildsensor verbunden.

Bildsensor und Platine sind je nach Ausgestaltung des Gehäusegrundkörpers in diesem oder auf diesem montiert. Der Bildsensor ist auf einer Verbindungsfläche im oder am Gehäusegrundkörpers derart montiert, dass seine optisch aktive Fläche der Verbindungsfläche gegenüber liegt und damit nach vorn zum Bildsensor weist. Die Montage auf der Verbindungsfläche kann auf verschiedene Weise ausgeführt sein. Der Bildsensor kann direkt oder indirekt auf der Verbindungsfläche montiert sein, Letzteres beispielsweise unter Zwischenlage von Haltemitteln oder einer Platine. Bei der Verbindungsfläche kann es sich beispielsweise um ein oder mehrere Auflager, ein Podest oder Wandungsfläche des Gehäusegrundkörpers handeln.

Die Lage "im Inneren" oder "auf einer Fläche" des Gehäusegrundkörpers ist in Verbindung mit der Gestaltung des nachfolgend beschriebenen weiteren Gehäusebauteils, des Gehäusedeckels zu betrachten, da beiden gemeinsam den Bildsensor und das Objektiv umhüllen sollen. Zu diesem Zweck ist es erforderlich, dass zumindest einer dieser Gehäusebauteile einen Hohlraum bereitstellt.

Die Art der Montage des Bildsensors hängt wesentlich vom Typ des Bildsensors ab und kann mit einem geeigneten der bekannten Verfahren erfolgen. Der Bildsensor kann in verschiedenen Montagezuständen montiert sein, beispielsweise mit BGA-Aufbau, Chip-on-Board-Aufbau, auf einer Leiterplatte, mit Interposer oder direkt auf der dafür vorgesehenen Fläche des Gehäusegrundköpers, z.B. einer der Gehäuseinnenflächen oder einem Gehäusepodest, und separat zur Platine. kann Es können eine Platine oder mehr als eine Platine, gegebenenfalls mit unterschiedlichen Funktionen, im oder am Gehäusegrundkörper angeordnet sein.

Die Objektiveinheit umfasst das Objektiv, welches zur Abbildung der Umgebung auf dem Bildsensor ausgebildet ist, einen Objektivhalter zur Aufnahme des Objektivs und den Gehäusedeckel. Alternativ kann der Objektivhalter in Verbindung mit dem Objektiv den Gehäusedeckel bilden oder der Objektivhalter mit dem Objektiv ist an diesem montiert. In letztem Fall weist der Gehäusedeckel eine Öffnung oder einen lichtdurchlässigen Bereich für den Lichteinfall auf.

Zur Abbildung der Umgebung auf den Bildsensor in der gewünschten Qualität ist das Objektiv mittels des Objektivhalters vor dem Bildsensor mit einem definierten Abstand zu diesem und mit parallelen optischen Achsen der beiden Komponenten angeordnet. Der für die Bildqualität erforderliche Abstand wird im Verlauf des Herstellungsverfahrens ermittelt und nachfolgend eingestellt. Details dazu sind zum Herstellungsverfahren beschrieben.

Die Umhüllung von Bildsensor und Objektiv mittels der beiden genannten Gehäusebauteile soll derart ausgebildet sein, dass das zur Bildaufnahme verwendete Licht nur durch das Objektiv auf den Bildsensor fällt. Damit ist die Umhüllung nicht vollständig gegenüber einfallendem Licht geschlossen, sondern hat im Bereich des Objektivs einen Lichtdurchgang. Ist das Kamerasystem für begrenzte Wellenlängenbereiche vorgesehen, beispielsweise sichtbares Licht, IR-Licht, UV-Licht oder andere, so dass kann für diesen Fall die lichtdichte Ausführung des Gehäuses auf die betreffenden Wellenlängenbereiche beschränkt sein. Ebenso kann Streulicht in einem für die Funktion der Kamera irrelevanten Umfang oder Ort unbeachtlich sein.

Die Begriffe Gehäusegrundkörper und Gehäusedeckel dienen lediglich der sprachlichen Unterscheidung und beschreiben nicht Design und Funktion beider Bauteile. Es ist unwesentlich, ob dem Bildsensor oder dem Objektiv ein Deckel im allgemeinen sprachlichen Sinne zugeordnet ist oder das Gehäuse weitere Einzelteile aufweist. Wesentlich ist lediglich, dass es im zusammengebauten Zustand den Lichteinfall auf den Bildsensor wie oben beschrieben begrenzt. Zum Zwecke der Herstellung, der Montage, Handhabung oder aus anderen Gründen können die Gehäusebauteile alternativ einteilig oder mehrteilig ausgebildet sein. Entsprechend verschiedener Ausgestaltungen kann beispielsweise der Gehäusedeckel einteilig mit dem Objektivhalter oder der Gehäusegrundkörper mehrteilig, Gehäuseboden und einem Gehäusemantel umfassend, ausgebildet sein.

Auch andere Komponenten des Kamerasystems können mehrteilig oder als komplexes Bauteil ausgeführt sein, wie es z.B. vom Objektiv oder von Platinen bekannt ist.

Sensoreinheit und Objektiveinheit sind über deren zugehöriges Gehäusebauteil fest und direkt miteinander verbunden. Die Verbindung ist an einer Fügefläche, an denen beide Gehäusebauteile direkt aneinander angrenzen, mittels Laserschweißen, einer thermischen Fügetechnik, ausgeführt. Diese Fügetechnik ermöglichen es, die beiden Gehäusebauteile ohne Klebstoff miteinander zu verbinden.

Mittels Laserschweißen können verschiedene Materialien direkt miteinander verbunden werden, auch Materialkombinationen aus Kunststoff und Metall. Die Gehäuseteile können auch zumindest teilweise glasfaserverstärkt sein.

Mit der direkten Verbindung beider Kameraeinheiten können die Nachteile aus dem Stand der Technik überwunden werden. Insbesondere kann die Gefahr von Rissen in der Klebefuge und von Verschiebungen während des Aushärtens vermieden werden. Jedoch erfordert die direkte thermische Verbindung der den Bildsensor haltenden Sensoreinheit mit der das Objektiv haltenden Objektiveinheit eine sehr präzise Positionierung sowohl des Bildsensors und des Objektivs in der zugehörigen Kameraeinheit sowie beider Kameraeinheiten relativ zueinander mit hoher Wiederholgenauigkeit im Herstellungsverfahren. Details dazu sind zum Verfahren und zur dazu verwendeten Vorrichtung beschrieben.

Zum Laserschweißen ist zumindest im Bereich der Fügefläche zumindest eines der beiden Gehäusebauteile laserabsorbierend und das andere, zweite Gehäusebauteil lasertransparent. Beim Laserschweißen durchdringt die Strahlung das lasertransparente Material und trifft auf das laserabsorbierende Material, welches teilweise schmilzt und beide Materialien miteinander verschweißt, wodurch die eingestellte Position beider Kameraeinheiten relativ zueinander fixiert wird.

Je nach Richtung der Bestrahlung der an die Fügefläche angrenzenden Bauteile können sowohl der Gehäusegrundkörper als auch der Gehäusedeckel die Lasertransparenz bzw. die Laserabsorption aufweisen. Als laserabsorbierend beziehungsweise lasertransparent sollen hier solche Materialien bezeichnet werden, die für das zum Laserschweißen verwendete Licht absorbierend beziehungsweise transparent sind.

Anschaulich ist es erforderlich, dass die Lasertransparenz in einem solchen Fall auf den für die Anwendung des Kamerasystems verwendeten Wellenlängenbereich abgestimmt sein muss, wenn das lasertransparente Teil der aktiven Umhüllung ist. Sofern für die Bildaufnahmen und für das Laserschweißen Licht unterschiedlicher Wellenlängenbereiche verwendet wird, besteht für die Gestaltung des lasertransparenten Bauteils ein größerer Spielraum.

Das lasertransparente Gehäusebauteil kann ein Füge- und Ausgleichselement als separate Komponente umfassen. Dieses ist ebenso zumindest im Bereich der Fügefläche lasertransparent.

Durch eine nur abschnittsweise Lasertransparenz kann die wellenlängenbestimmte Anwendungsbreite des Kamerasystems erweitert werden, indem der lasertransparente Abschnitt nicht in den Gehäuseinnenraum, in welchem der Bildsensor angeordnet ist, mündet.

Eine abschnittsweise Lasertransparenz eines Gehäuseteils kann durch ein mehrkomponentiges Gehäuseteil realisiert sein, dessen Komponenten durch geeignete Mittel oder Verfahren miteinander verbunden sind. Beispielsweise kann ein Gehäuseteil ein so genanntes 2-komponentiges Spritzgussbauteil sein, bei dem durch geeignete Prozess- und Temperaturführung während des Spritzgusses beide Komponenten in einem Verfahrensablauf gefertigt und so fest miteinander verbunden sind.

Sofern das Kamerasystem mehr als eine Platine umfasst, können diese entsprechend alternativer Ausführungsformen entweder direkt aufeinander gestapelt werden, mit geeigneter elektrischer Isolierung zwischen den Platinen, oder unter Zwischenlage von Abstandshaltern nebeneinander liegen. Die Abstandshalter können optional auch als EMV-Schirmung ausgebildet sein.

Die verfahrensseitige Lösung der Aufgabenstellung betrifft insbesondere die exakte Positionierung von Sensoreinheit und Objektiveinheit relativ zueinander, da diese immanent auch Objektiv und Bildsensor endgültig zueinander positioniert. Die exakte Positionierung ist Voraussetzung für die direkte thermische Verbindung der beiden Kameraeinheiten, auch weil diese Art der Verbindung keine oder nur geringfügige Korrekturen während des Fügeprozesses zulässt.

Zur Herstellung des zuvor beschriebenen Kamerasystems werden zunächst für eine vorgefertigte Sensoreinheit, welche nachfolgend auch als erste Kameraeinheit bezeichnet wird und gemäß obiger Beschreibung einen Gehäusegrundkörper aufweist, in oder an welchem ein Bildsensor und zumindest eine Platine montiert sind, und eine vorgefertigte Objektiveinheit, welche nachfolgend auch als zweite Kameraeinheit bezeichnet wird und den Objektivhalter mit dem Objektiv sowie einen Gehäusedeckel aufweist, solche Relativpositionen ermittelt, bei welchen die optischen Achsen von Objektiv und Bildsensor parallel zueinander ausgerichtet sind. Die parallele Ausrichtung beider optischen Achsen schließt die Übereinstimmung der Achsen ein. Die Genauigkeit der Ausrichtung unterliegt jenen Grenzen, welche durch die erzielbare Aufnahmequalität feststellbar und mit den Toleranzen der Positionierungsvorrichtungen erzielbar sind. Sie kann ebenso durch vom Anwender vordefinierte, für seine Zwecke hinreichende Aufnahmequalität begrenzt werden.

Beide Kameraeinheiten werden entsprechend der zuvor ermittelten Positionen mittels Mehr-Achs-Positioniervorrichtung(en) relativ zueinander positioniert, so dass sich beide Kameraeinheiten entlang einer Fügefläche gegenüber liegen und dabei Objektiv und Bildsensor umhüllen. Die Fügefläche wird durch sich gegenüberliegende Wandungsabschnitte von Gehäusedeckel und Gehäusegrundkörper gebildet. Ein temporär dazwischen liegender Spalt ist unbeachtlich, da dieser infolge einer Nachjustierung und der nachfolgenden direkten Verbindung beider Gehäuseteile überbrückt wird.

Die Positionierung der beiden Kameraeinheiten relativ zueinander kann mittels einer Mehr-Achs-Positioniervorrichtung oder mehrerer davon erfolgen. Alternativ sind auch einfachere Positionierungsvorrichtungen verwendbar, sofern die exakten Positionen und Ausrichtungen für beide Kameraeinheiten bekannt sind.

Nach der Positionierung liegen sich beide Kameraeinheiten entlang einer Fügefläche gegenüber und umhüllen den Bildsensor.

Die Fügefläche und damit der Abstand von Objektiv und Sensor kann sich aus der Konstruktion der beiden Kameraeinheiten ergeben, wobei der Gestaltung der Fügefläche auch bereits ein kalkulierter (simulierter oder berechneter) oder ein durch Versuche im Rahmen der Konstruktion ermittelter Abstand zwischen Objektiv und Bildsensor zugrunde liegen kann.

Der für eine gewünschte Bildqualität erforderliche Abstand zwischen Objektiv und Bildsensor kann in Ausführungsformen des Verfahrens entweder aus den Positionen im gemeinsamen oder zwei verschiedenen Koordinatensystem, in welchem die Referenzkomponenten eine definierte Position haben, berechnet oder wie beschrieben anhand von Referenzaufnahmen oder einer Kombination von beidem ermittelt. Alternativ oder ergänzend kann der Abstand während der Positionierung beider Kameraeinheiten zueinander auch aktiv eingestellt oder überprüft werden. Dazu wird während der Positionierung die Bildschärfe gemessen und der Abstand bei der gewünschten Bildschärfe festgelegt.

Die Berechnung des Abstandes und ebenso die Relativpositionen beider Gehäusebauteile mit parallelen optischen Achsen von Objektiv und Bildsensor kann in einer weiteren Ausgestaltung mittels eines gemeinsamen Referenzsystems erfolgen, auf welches alle im Verfahren verwendeten optisch aktiven Komponenten und damit auch die zuvor beschriebenen Positionierungsvorgänge bezogen werden. Ein solches Referenzsystem kann virtuell sein, wie das genannte globale Koordinatensystem oder real, wie ein konkreter physischer Punkt der verwendeten Vorrichtung.

Im Ergebnis des Positionierungsprozesses beider Kameraeinheiten relativ zueinander grenzen die beiden Flächen der Sensoreinheit und der Objektiveinheit, welche im endmontierten Zustand die Fügefläche bilden, soweit aneinander, dass eine direkte Verbindung beider Kameraeinheiten entlang der Fügefläche durch thermisches Fügen erfolgen kann und Objektiv und Bildsensor die für die gewünschte Bildqualität erforderliche Relativposition zueinander aufweisen. Durch Herstellung der Verbindung wird das Kameragehäuse geschlossen.

Die Verbindung beider Gehäusebauteile mittels thermischem Fügen mittels Laserschweißen ermöglicht es, dass Spalten zwischen den Fügepartnern verbleiben können, die aus den üblichen Toleranzen der zur Verfügung stehenden Konstruktions- und Produktionsmethoden nach der Positionierung verbleiben. Durch das Schmelzen zumindest eines der Fügepartner können diese verschlossen werden. Einen Beitrag dazu leistet auch das sehr präzise Positionierungsverfahren, dessen Toleranzen mit den derzeit verwendbaren Mehr-Achs-Positioniervorrichtungen deutlich unter denen aus der Konstruktion und Herstellung liegen.

Sofern die verbleibenden Spalten zu groß für das thermische Fügeverfahren sind, kann eine Korrektur in der Lage von Bildsensor oder Objektiv im jeweiligen Gehäusebauteil erfolgen. Dadurch können innerhalb des Gehäuses entstehende Spalten mit geeignetem Material lichtdicht verschlossen werden. Das kann auch mit flexiblen Materialien, wie Kleber, erfolgen, da diese im Endzustand im Inneren des Gehäuses liegen und nicht an dessen Verschluss beteiligt sind.

Alternativ kann ein Spalt zwischen den beiden Gehäusebauteilen durch eine Füge- und Ausgleichselement soweit verkleinert werden, dass ein direktes thermisches Fügen, gegebenenfalls auch mit zwei Fügeflächen und zwei Fügeschritte, möglich ist. Oder in die Fuge wird ein Puffermaterial eingebracht, welches beim Schweißen die Fuge schließt. In beiden Fällen wird Material verwendet, welches vergleichbar oder gleich dem von zumindest einem der angrenzenden Gehäusebauteile ist, so dass auch hier ein direktes Fügen erfolgen kann.

Die Ermittlung der Relativpositionen kann auf verschiedene Weise erfolgen. In einer Ausführungsform wird eine Kameraeinheit, optional auch beide, durch eine Referenzkameraeinheit ergänzt, welche zur Herstellung eine Aufnahme eines Referenzmusters oder Referenzbildes, nachfolgend allgemein als Referenzaufnahme bezeichnet, erforderlich ist. Für die Sensoreinheit wird folglich eine Referenzobjektiv benötigt und für die Objektiveinheit ein Referenzsensor. Kameraeinheit und Referenzkameraeinheit werden mittels einer Mehr-Achs-Positioniervorrichtung nunmehr temporär so zueinander positioniert, dass eine Referenzaufnahme herstellbar ist.

Der Begriff "Referenz" für eine Kameraeinheit soll dokumentieren, dass diese Refererenzkameraeinheit fix zu einem geeigneten, beispielsweise einem globalen, Koordinatensystem angeordnet ist, so dass relativ zur Referenzkameraeinheit die Position der Kameraeinheit eindeutig definierbar ist. Augenscheinlich sollte die jeweilige Referenzkameraeinheit vergleichbare Charakteristika aufweisen, wie die Kameraeinheit des herzustellenden Kamerasystems. Falls dies nicht der Fall ist, sollte zumindest die aus dem Unterschied resultierenden Korrekturen in der Positionierung bekannt oder zuvor ermittelt werden.

Die so erzeugte Aufnahme eines Referenzmusters oder Referenzbildes zur Beurteilung der Aufnahmequalität in der ersten Positionierung gestattet eine Beurteilung der Positionierung. Verwendbare Referenzmuster können beispielsweise Raster geometrischer Flächen sein, die gegeneinander klar abgegrenzt sein müssen. Aus beiden Alternativen von Referenzaufnahmen ist mit verschiedenen bekannten Methoden die Aufnahmequalität nach objektiven Kriterien zu ermitteln.

Genügt die Aufnahmequalität der Referenzaufnahme nicht den zuvor definierten Anforderungen kann mittels der Mehr-Achs-Positioniervorrichtung nachpositioniert und dieser Schritt so oft wiederholt werden, bis die gewünschte Aufnahmequalität erreicht ist.

Liegen Referenzaufnahmen mit der gewünschten Aufnahmequalität vor, kann aus der Positionierung der Kameraeinheit zur Referenzkameraeinheit auf die Relativpositionen beider Kameraeinheiten zueinander geschlossen werden, indem beide Kameraeinheiten in einem gemeinsamen oder zwei aufeinander beziehbaren Koordinatensystemen angeordnet werden.

Ein Verfahren zur Herstellung eines Kamerasystems, welches beide Kamerasysteme mittels eines oder zweier Mehr-Achs-Positioniervorrichtung separat zueinander positioniert, umfasst die Verfahrensschritte nach Anspruch 8.

Eine Ausführungsform des Verfahrens kann folgende Verfahrensschritte umfassen:
- Bereitstellen und Halten einer Sensoreinheit als erste Kameraeinheit, welche zumindest einen Gehäusegrundkörper aufweist, in oder an welchem ein Bildsensor und zumindest eine Platine montiert sind,
- deren Positionierung relativ zu einem Referenzobjektiv mittels einer Mehr-Achs-Positioniervorrichtung, so dass eine Aufnahme eines Referenzmusters oder Referenzbildes, hier allgemein als Referenzaufnahme bezeichnet, der Sensoreinheit herstellbar ist,
- Herstellung einer Referenzaufnahme der Sensoreinheit in einer gewünschten, definierten Aufnahmequalität, wobei bis zur Erzielung der gewünschten Aufnahmequalität Nachpositionierungen der Sensoreinheit und erneute Referenzaufnahmen erfolgen können,
- Bereitstellen und Halten einer Objektiveinheit als zweite Kameraeinheit, welche ein Objektiv, einen Objektivhalter sowie einen Gehäusedeckel aufweist
- deren Positionierung relativ zu einem Referenzbildsensor mittels einer Mehr-Achs-Positioniervorrichtung so dass eine Referenzaufnahme der Objektiveinheit herstellbar ist,
- Herstellung einer Referenzaufnahme der Objektiveinheit in einer gewünschten, definierten Aufnahmequalität, wie zur Referenzaufnahme der Sensoreinheit beschrieben,
- Ermittlung der Relativpositionen beider Gehäusebauteile, in welchen die beiden Referenzaufnahme die definierte Aufnahmequalität und damit eine hinreichend exakte parallele Ausrichtung der optischen Achsen von Objektiv und Bildsensor aufweisen,
- Positionierung von Objektiveinheit und der Sensoreinheit relativ zueinander mit den zuvor ermittelten Positionsdaten, so dass sich beide Kameraeinheiten entlang einer Fügefläche gegenüber liegen und dabei Objektiv und Bildsensor umhüllen, und nachfolgend
- Herstellung einer direkten Verbindung von Objektiveinheit und Sensoreinheit an der Fügefläche durch thermisches Fügen.

Alternativ können die beiden Kameraeinheiten auch mittels einer oder mehrerer Mehr-Achs-Positioniervorrichtungen, bevorzugt einer für jede Kameraeinheit, temporär zueinander positioniert werden und ein Probebild oder ein Probemuster, hier als Probeaufnahme bezeichnet, zur Beurteilung der Positionierung hergestellt werden. Sofern die Probeaufnahme nicht die erforderliche Aufnahmequalität aufweist, werden Nachpositionierung und Herstellung weiterer Probeaufnahmen so oft vorgenommen, bis die exakte Position iterativ gefunden ist.

In bestimmten Anwendungsfällen kann es erforderlich sein, dass für die exakte Positionierung von Bildsensor und Objektiv auch eine exakte Ausrichtung in einer Ebene erforderlich ist, die parallel zur optisch aktiven Fläche des Bildsensors liegt. Für diesen Fall können auch die dazu benötigten Positionsdaten, wie oben zu den anderen beschrieben, aus dem Positionierungsverfahren gewonnen werde, so dass auch diese Ausrichtung in den Ablauf einbezogen werden kann. Werden die Ausrichtungsrichtungen und Ausrichtungsebenen beispielsweise, jedoch nicht beschränkend, auf ein kartesisches Koordinatensystem bezogen, wird die Ebene der optisch aktiven Fläche regelmäßig als X-Y-Ebene bezeichnet und die Richtung der optischen Achsen als Z-Richtung. Die Ausrichtung in der X-Y-Ebene kann die X-Y-Position und/oder den Winkel ϑ in Bezug auf die X- oder Y-Achse betreffen. Die verwendeten Mehr-Achs-Positioniervorrichtungen lassen auch die Ausrichtung in dieser Ebene zu, wenn sie dafür genügend Bewegungsachsen aufweisen. Das ist regelmäßig bei fünf oder mehr Achsen gegeben.

Eine zur Ausführung des Verfahrens verwendbare Vorrichtung umfasst eine oder zwei Mehr-Achs-Positioniervorrichtungen zur Halterung und Positionierung einer Sensoreinheit und einer Objektiveinheit, ein Referenzsystem auf welches beide Mehr-Achs-Positioniervorrichtungen räumlich beziehbar sind, ein Referenzobjektiv und ein Referenzbildsensor, eine Steuervorrichtung zum Betrieb der Mehr-Achs-Positioniervorrichtung(en) und zur Herstellung der Referenzaufnahmen sowie Mittel zum thermischen Fügen von Objektiveinheit und Sensoreinheit.

Aufgrund des gemeinsamen Referenzsystems können grundsätzlich beide Kameraeinheiten während deren Positionierung zu den Referenzobjekten mit derselben Mehr-Achs-Positioniervorrichtung positioniert werden. Für die anschließende Positionierung beider Kameraeinheiten relativ zueinander ist jedoch die Verwendung von zwei Mehr-Achs-Positioniervorrichtungen, eines für jede Kameraeinheit, von Vorteil, da so hohe Präzision der Positionierung gewährleistet ist.

Mehr-Achs-Positioniervorrichtungen sind aus der Robotik und der automatisierten Produktion bekannt. Mittels mehrerer Drehachsen ist der Werkzeugkopf, hier die Halterung der Kameraeinheiten, im Raum bewegbar. Bereits bei fünf Achsen kann jede Position und jeder Winkel eingestellt werden. Durch geeignete Steuerung und Antriebe ist dies auch mit höchster Präzision möglich.

Entsprechend einer Ausgestaltung der Vorrichtung kann die Steuervorrichtung auch einen Speicher umfassen, in welchem die Relativpositionen von Sensoreinheit und Objektiveinheit nach einer ersten exakten Positionierung gespeichert werden. Damit ist es möglich, für einen bestimmten Kameratyp das Positionierungsverfahren und die Positionierungsvorrichtung zu kalibrieren und die Herstellung automatisiert und mit gleichbleibend hoher Präzision auszuführen.

Zu den weiteren Komponenten der Vorrichtung wird auf die Darlegungen zum Kamerasystem und zum Herstellungsverfahren verwiesen.

Es wurde festgestellt, dass die beschriebene exakte Ausrichtung in Verbindung mit der direkten Fügung der beiden Gehäusebauteile und mit diesen auch der beiden Kameraeinheiten einen positiven Effekt auf die thermische Stabilität einem Kamerasystems hat. Selbst bei thermischen Schwankungen in der Anwendung können Bilder mit der für die Steuerungsprozesse erforderlichen hohen Bildqualität aufgenommen werden.

Die Erfindung soll nachfolgend anhand von Ausführungsformen näher erläutert werden. Die zugehörigen Zeichnungen zeigen in
- Fig. 1A bis Fig. 1C: alternative Ausführungsformen einer Sensoreinheit,
- Fig. 2: eine Ausführungsform einer Objektiveinheit,
- Fig. 3A und Fig. 3B: alternative Ausführungsforen im Bereich der Verbindung von Sensor- und Objektiveinheit,
- Fig. 4A bis Fig. 4C: drei Verfahrensschritte zur Positionierung von Bildsensor und Objektiv relativ zueinander,
- Fig. 5: eine Detaildarstellung der Fügefläche aus Fig. 4C und
- Fig. 6A und Fig. 6B: eine Ausführungsform eines Kamerasystems in Sprengdarstellung und im montierten Zustand.

Der Fachmann würde die zuvor in den verschiedenen Ausgestaltungen der Erfindung realisierten Merkmale in weiteren Ausführungsformen variieren und kombinieren soweit es ihm zweckdienlich und sinnvoll erscheint.

Die nachfolgend beschriebenen Figuren zeigen nur die für die Beschreibung der Erfindung notwendigen Komponenten der jeweiligen Ausführungsform. Sie erheben keinen Anspruch auf Vollständigkeit und Maßstäblichkeit. Sofern gleiche Bestandteile mit derselben Funktion in verschiedenen Figuren dargestellt sind, sind diese durch dasselbe Bezugszeichen gekennzeichnet.

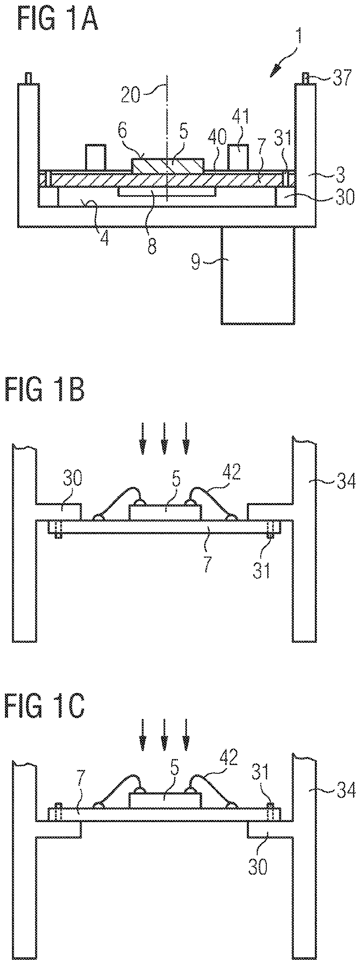

Die Sensoreinheit 1 der Ausführungsform in Fig. 1A umfasst den Gehäusegrundkörper 3, der einteilig ausgebildet ist und beispielsweise eine trogförmige Gestalt haben kann. Andere, auch mehrteilige, Formen des Gehäusegrundkörpers 3 sind z.B. in Abhängigkeit von der Einbausituation des Kamerasystems 1 möglich. Beispielsweise kann der Gehäusegrundkörper 3 plattenförmig ausgebildet sein, so dass der Bildsensor 5 auf der Platte angeordnet ist.

Im Gehäusegrundköper 3 ist über dessen Grundfläche 4 der Bildsensor 5 montiert. Letztere fungiert im Ausführungsbeispiel als Verbindungsfläche des Gehäusegrundkörpers 3 zum Bildsensor 5. In Fig. 1A ist der Bildsensor 5 beispielhaft, jedoch nicht beschränkend auf einer Platine 7 montiert. Die Platine 7 ist mit geeigneten Mitteln im Gehäusegrundkörper 3 gehalten und fixiert. Im dargestellten Ausführungsbeispiel ist die Platine 7 durch Auflager 30 gehalten, die auf der Grundfläche 4 ausgebildet sind und einen Abstand zur Grundfläche 4 realisieren und auf ihrer Vorderseite Haltestifte 31 aufweisen. Die Fixierung der Platine 7 kann beispielsweise mittels Kleben, Heißverstemmen oder Laserschweißen erfolgen. Alternativ kann der Bildsensor 5 auch auf andere Weise montiert sein. Beispiele dafür sind in der obigen Erfindungsbeschreibung angeführt.

Die Platine 7 umfasst Signal- und Versorgungsleitungen 40 zur Weiterleitung von Steuer- und Bildsignale vom und zum Bildsensor 5, sowie elektronische Bauteile 41, welche dem Betrieb des Bildsensors 5 und optional zumindest einer Vorverarbeitung der Bildsignale dienen. Für die Gestaltung und Ausstattung der Platine 7 stehen dem Fachmann entsprechend den Anwendungen und deren Anforderungen des Kamerasystems 1 sehr unterschiedliche Varianten zur Verfügung.

Der Gehäusegrundkörper 3 weist einen außen liegenden elektrischen Steckkontakt 9 des Kamerasystems auf, zur elektrischen Verbindung der Platine 7 und über diese des Bildsensors 5 und der elektronischen Bauteile 41 mit einer externen Steuereinheit und/oder Speichereinheit (nicht dargestellt). Optional kann ein Wärmeleitpad 8 unter der Platine 7 eingefügt sein zur Ableitung der vom Bildsensor 5 und/oder den elektronischen Bauteilen 41 erzeugten Wärme.

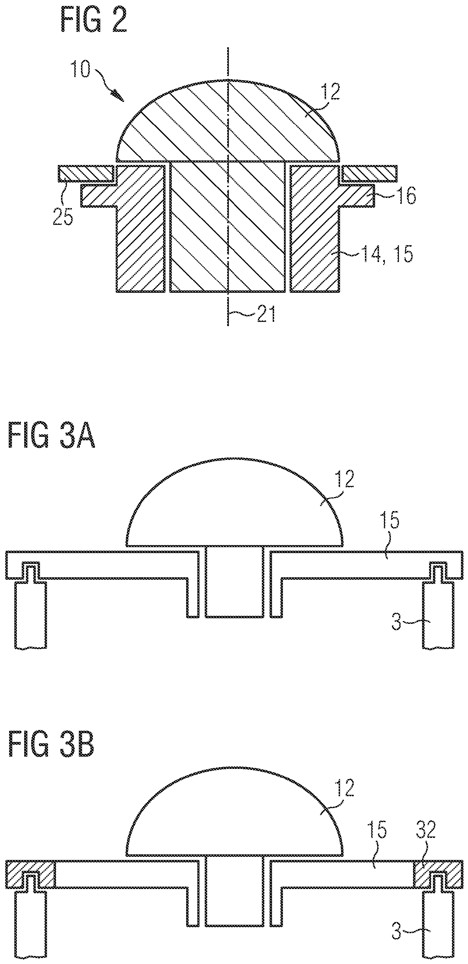

Die vorderste Grundfläche des Gehäusegrundkörpers 3 kann eine umlaufende Erhebung (nicht dargestellt) aufweisen, welche der Führung des Gehäusedeckels 15 (Fig. 3A und Fig. 3B) beim Fügen der beiden Gehäusebauteile 3, 15 dient.

Die Art und Position der Platine 7 und/oder des Bildsensors 5 können durch die Anwendung des Kamerasystems, den Fertigungsablauf, die exakte Positionierung des Bildsensors 5 im Gehäusegrundkörper oder durch andere Anforderungen bestimmt sein. Fig. 1B und Fig. 1C zeigen mögliche alternative Ausgestaltungen eines Gehäusegrundkörpers 3 und der Anordnung der Platine 7 darin. Der Gehäusegrundkörper 3 dieser Ausführungsformen ist mehrteilig aus einem Gehäusemantel 34 mit einem Gehäuseboden (nicht dargestellt) ausgebildet. Der Gehäusemantel 34 weist an seiner inneren Mantelfläche Auflager 30 mit Haltestiften 31 auf, zur Halterung und Fixierung der Platine 7. In Fig. 1A ist die Platine 7 mit dem Bildsensor 5 von vorn auf den Auflagern 30 montiert und in Fig. 1B rückseitig an den Auflagern 30 befestigt, wobei die rückseitige Montage durch den zu öffnenden Boden des Gehäusegrundkörpers 3 unterstützt wird.

Die "vordere" Seite des Bildsensors 5 und damit des Gehäusegrundkörpers 3 wird in den Fig. 1B und Fig. 1C durch den Lichteinfall (durch Pfeile dargestellt) gekennzeichnet. Die elektrische Verbindung des Bildsensors 5 mit der Platine 7 ist lediglich zur Dokumentation dieser Verbindung durch Drahtbrücken 42 dargestellt. Andere bekannte Ausführungen sind optional möglich.

Der Objektivhalter 14 der in Fig. 2 beispielhaft, jedoch nicht beschränkend, dargestellten Objektiveinheit 10 ist als Gehäusedeckel 15 ausgeführt, indem er im oberen Bereich eine umlaufende, beispielsweise ringförmige, Verstärkung 16 aufweist auf welche ein Füge- und Ausgleichselement 25 auflegbar ist. Andere, auch einteilige Ausgestaltungen des Gehäusedeckels 15 und der Verbindungsstellen zum Gehäusegrundkörper 3 sind möglich. Beispielsweise kann die Objektiveinheit einen separaten Gehäusedeckel aufweisen. Beispiele werden nachfolgend zu Fig. 3A und Fig. 3B beschrieben.

Die in Fig. 2 dargestellte Ausführungsform einer Objektiveinheit 10 umfasst zumindest das Objektiv 12 und den Objektivhalter 14, die miteinander in einer geeigneten Weise mechanisch verbunden sind. Das Objektiv 12 kann im Objektivhalter 14 beispielsweise eingeschraubt, eingeklebt oder eingespritzt sein.

Mögliche Ausgestaltungen der Verbindungsstellen zwischen Gehäusegrundkörper 3 und Gehäusedeckel 15, die gleichzeitig Verbindungsstellen zwischen Objektiveinheit 10 und Sensoreinheit 1 sind, sind in den Fig. 3A und Fig. 3B dargestellt. In diesen Ausführungsformen erfolgt das Fügen der beiden Komponenten mittels Laserschweißen.

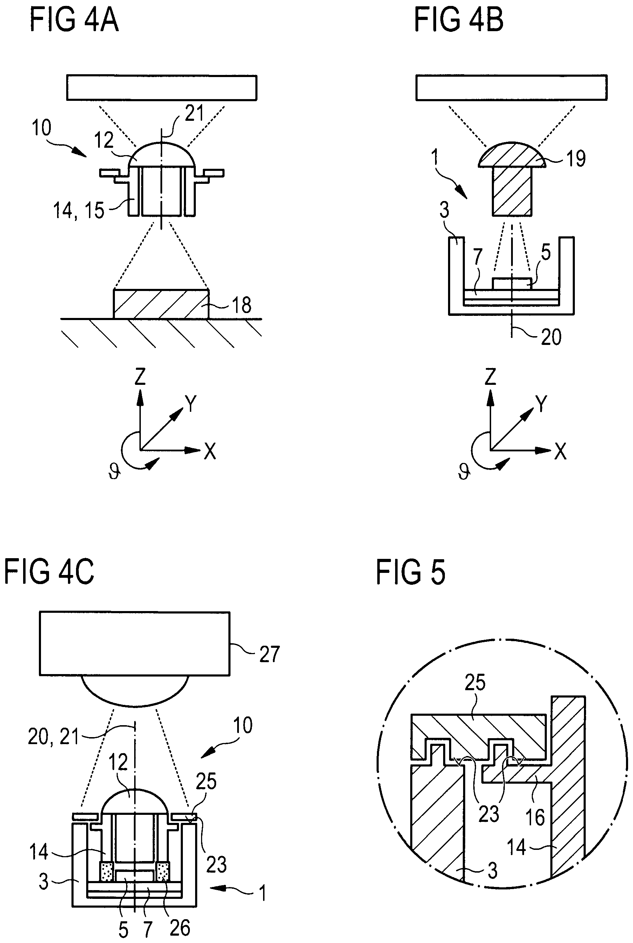

Zur Ausführung des Laserschweißens weist zumindest einer der beiden Gehäusebauteile 3, 15 zumindest im Bereich seiner Fügefläche 23 (Fig. 4C, Fig. 5) ein laserabsorbierendes Material auf. Ein zweites Gehäusebauteil weist im Bereich der Fügefläche 23 (Fig. 4C, Fig. 5) ein lasertransparentes Material auf.

Das dem Laserschweißen dienende zweite Gehäuseteil kann ein separates Gehäuseteil, wie im Ausführungsbeispiel gemäß Fig. 4C und der auszugsweise vergrößerten Darstellung in Fig. 5 beispielhaft ein Füge- und Ausgleichselement 25, oder dem Gehäusegrundkörper 3 bzw. dem Gehäusedeckel 15 zugeordnet sein, d. h. dessen Bestandteil sein.

Beispiele für die letztgenannte Variante sind in Fig. 3A und Fig. 3B dargestellt. In Fig. 3A werden Gehäusedeckel 15 und Gehäusegrundkörper 3 direkt durch Laserschweißen verbunden, wobei einer der beiden Bauteile lasertransparent und das andere laserabsorbierend ist. Beispielsweise ist der Gehäusedeckel 15, zumindest abschnittsweise im Bereich der Fügestelle, lasertransparent.

In Fig. 3B ist ein 2K-Spriztgussteil für den Gehäusedeckel 15 verwendet. Dieser ist nur im Randbereich 32 (schraffiert dargestellt) lasertransparent. Der Randbereich 32 ist durch das beschriebene Spritzgussverfahren einstückig am Gehäusedeckel 15 ausgebildet. Alternativ kann der lasertransparente Abschnitt am Gehäusegrundkörper 3 ausgebildet sein oder sind mit anderen Verfahren gefertigte mehrteilige Gehäuseteile verwendbar.

Die wesentlichen Positionierungsschritte sind in den Fig. 4A bis Fig. 4C dargestellt. Beide Kameraeinheiten, Sensoreinheit 1 und Objektiveinheit 10, werden zunächst zur optischen Positionierung des Objektivs 12 und des Bildsensors 5 separat voneinander mittels Mehr-Achs-Positioniervorrichtungen (dargestellt durch ein Koordinatensystem), beispielsweise einem 5- oder 6-Achssystem, ausgerichtet (Fig. 4A, Fig. 4B). Dabei wird die jeweilige vormontierte Kameraeinheit mit der jeweils fehlenden optischen Komponente als fixe Komponente (fette Linie und schraffiert), d.h. die Objektiveinheit 10 mit einem fixen Bildsensor 18 und die Sensoreinheit 1 mit einem fixen Objektiv 19, zur Aufnahme von Bildern verwendet und mittels der Positioniervorrichtung so positioniert, dass ein Bild eines bestimmten Musters mit einer definierten Schärfe oder ein Referenzbild aufnehmbar ist. Für die Bestimmung der Bildschärfe oder der Qualität des Referenzbildes sind bekannte Verfahren verwendbar.

Aus beiden getrennten Ausrichtprozessen wird der für die gewünschte Bildschärfe des Kamerasystems erforderliche Abstand von Objektiv und Bildsensor (Z-Wert) berechnet und die X-Y-Position sowie die Z-Positionen zur parallelen Ausrichtung der optischen Achsen in Bezug auf ein globales, beispielsweise kartesisches, Koordinatensystem ermittelt.

Zur Positionierung der beiden Kameraeinheiten in der endgültigen, für das direkte Fügen und für die gewünschte Bildschärfe bzw. Bildqualität erforderlichen, Position sind die beiden Positioniervorrichtungen über ein gemeinsames Referenzsystem aufeinander bezogen.

Mithilfe der in den separaten Ausrichtprozessen gewonnenen optischen Achsen 20, 21, deren Lage zur Z-Achse und des Z-Wertes werden die beiden Kameraeinheiten 1, 10 in X-, Y- und Z-Richtung sowie gegebenenfalls mit dem erforderlichen Winkel ϑ relativ zueinander exakt ausgerichtet, positioniert und in dieser Position die Gehäusebauteile 3, 15 entlang von Fügeflächen 23 miteinander lichtdicht verbunden, beispielsweise mittels Laserschweißen verschweißt (Fig. 4C). Korrekturen der Positionen während des Verbindungsprozesses zur Einstellung der gewünschten Bildschärfe, wie aus dem Stand der Technik bekannt, sind nicht erforderlich. In den Endpositionen liegen die beiden Bauteilgruppen entlang der Fügefläche 23 direkt aneinander.

Optional kann eine Fuge zwischen dem unteren Rand des Objektivhalters 14 und der Platine 7 durch eine für den betreffenden Wellenlängenbereich dichtende Klebeverbindung 26 geschlossen werden, wie in Fig. 4C dargestellt.

Im Ausführungsbeispiel nach Fig. 4C und Fig. 5 sind der Gehäusegrundkörper 3 und der Gehäusedeckel 15 aus glasfaserverstärktem laserabsorbierendem Material. Das Füge- und Ausgleichselement 25 ist als Ring aus lasertransparentem Material hergestellt. Es liegt auf der umlaufenden, beispielsweise ringförmigen, Verstärkung 16 des Objektivträgers 14 und dem oberen Rand des Gehäusegrundkörpers 3 auf, so dass von oben mittels Laservorrichtung 27 Strahlung auf das Füge- und Ausgleichselement 25 gerichtet werden kann.

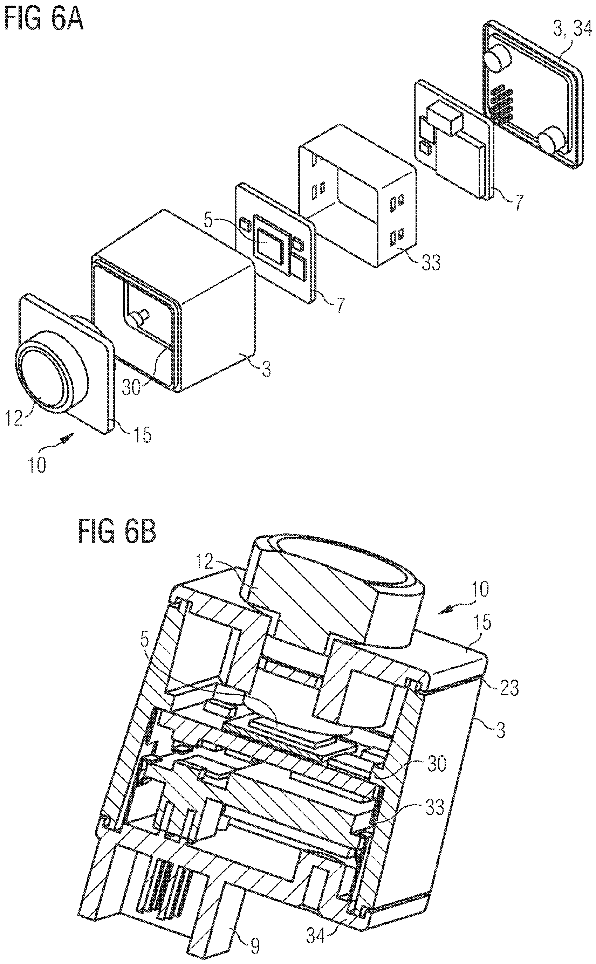

Fig. 6A zeigt eine alternative Ausführungsform eines Kamerasystems in Sprengdarstellung. In dieser Ausführungsform wird die Objektiveinheit 10 durch den Gehäusedeckel 15 als Objektivhalter mit eingespritztem Objektiv 12 gebildet. Der Gehäusegrundkörper 3 ist pyramidenstumpfförmig ausgebildet. An dessen Auflager 30 im Inneren des Gehäusegrundkörpers 3 werden von der Rückseite her zwei Platinen 7 montiert, die mittels Abstandshalter 33 relativ zueinander positioniert sind. Der Abstandshalter 33 kann metallisch ausgebildet sein, so dass er gleichzeitig als EMV- (elektromagnetische Verträglichkeits-) Schirmung fungieren kann. Anderen Ausführungen der Abstandshalter sind möglich. Sofern eine EMV-Schirmung benötigt wird, kann diese auch auf andere Weise realisiert sein. Die vordere der beiden Platinen 7 trägt den Bildsensor 5.

Rückseitig wird der Gehäusegrundkörper 3 durch einen Gehäuseboden geschlossen, welcher einen elektrischen Steckkontakt 9 des Kamerasystems umfasst.

Fig. 6B stellt die Ausführungsform aus Fig. 6A im montierten Zustand im Schnitt dar. Zu erkennen sind die umlaufenden Verbindungen zwischen dem Gehäusegrundkörper 3 und dem Gehäusedeckel 15 sowie dem Gehäuseboden. Im Falle der Verbindung dieser Bauteile mittels Laserschweißen, ist beispielsweise der Gehäusegrundkörper 3 aus laserabsorbierendem Material und Gehäusedeckel 15 sowie Gehäuseboden, zumindest im Bereich der Fügestellen, aus lasertransparentem Material.

### Bezugszeichenliste

- 1: Sensoreinheit, erste Kameraeinheit
- 3: Gehäusegrundkörper
- 4: Grundfläche
- 5: Bildsensor
- 6: optisch aktive Fläche
- 7: Platine
- 8: Wärmeleitpad
- 9: Steckkontakt
- 10: Objektiveinheit, zweite Kameraeinheit
- 12: Objektiv
- 14: Objektivhalter
- 15: Gehäusedeckel
- 16: Verstärkung
- 18: Referenzbildsensor
- 19: Referenzobjektiv
- 20, 21: optische Achsen
- 23: Fügefläche
- 25: Füge- und Ausgleichselement
- 26: Klebeverbindung
- 27: Laservorrichtung
- 30: Auflager
- 31: Haltestifte
- 32: Randbereich
- 33: Abstandshalter
- 34: Gehäusemantel

- 40: Signal- und Versorgungsleitungen
- 41: elektronische Bauteile
- 42: Drahtbrücke

## Patentansprüche

1. Kamerasystem zur Aufnahme von Bildern der Umgebung des Kamerasystems, welches folgende Komponenten umfasst:
- zwei Kameraeinheiten, und zwar eine Sensoreinheit (1) und eine Objektiveinheit (10),
- wobei die Sensoreinheit (1) einen Bildsensor (5), zumindest eine Platine (7) und einen Gehäusegrundkörper (3) als ein erstes Gehäusebauteil umfasst,
- wobei die Platine (7) Signal- und Versorgungsleitungen (40) sowie elektronische Bauteile (41) zum Betreiben des Bildsensors (5) aufweist und elektrisch mit dem Bildsensor (5) verbunden ist und
- Bildsensor (5) und Platine (7) im oder auf dem Gehäusegrundkörper (3) montiert sind,
- wobei die Objektiveinheit (10) ein Objektiv (12) zur Abbildung der Umgebung auf dem Bildsensor (5), einen Objektivhalter (14) zur Aufnahme des Objektivs und einen Gehäusedeckel (15) als ein weiteres Gehäusebauteil umfasst und
- wobei das Objektiv (12) vor dem Bildsensor (5) mit einem Abstand a zu diesem und mit parallelen optischen Achsen (20, 21) der beiden Komponenten angeordnet ist,
- wobei die beiden Gehäusebauteile an einer Fügefläche (23) durch Laserschweißen direkt miteinander verbunden sind und
- den Bildsensor (5) und das Objektiv (12) derart umhüllen, dass das zur Bildaufnahme verwendete Licht nur durch das Objektiv (12) auf den Bildsensor (5) fällt,
- wobei zumindest eines der beiden Gehäusebauteile zumindest im Bereich der Fügefläche (23) absorbierend für das zum Laserschweißen verwendete Licht, nachfolgend als laserabsorbierend bezeichnet, ist und
- das zweite der Gehäusebauteile zumindest im Bereich der Fügefläche (23) transparent für das zum Laserschweißen verwendete Licht, nachfolgend als lasertransparent bezeichnet, ist,
**dadurch gekennzeichnet, dass**
- besagtes zweites Gehäusebauteil mehrkomponentig ausgebildet ist und ein Füge- und Ausgleichselement (25) als separate Komponente umfasst, welches zumindest im Bereich der Fügefläche (23) lasertransparent ist, und die Komponenten des zweiten Gehäusebauteils miteinander verbunden sind.

2. Kamerasystem nach Anspruch 1, wobei zumindest eines der beiden Gehäusebauteile ein Füge- und Ausgleichselement (25) aufweist, zur Einstellung des Abstandes zwischen Objektiv (12) und Bildsensor (5).

3. Kamerasystem nach einem der vorstehenden Ansprüche, wobei der Gehäusedeckel (15) einteilig oder mehrteilig mit dem Objektivhalter (14) ausgebildet ist.

4. Kamerasystem nach einem der vorstehenden Ansprüche, wobei der Gehäusegrundkörper (3) einteilig oder mehrteilig mit einem Gehäuseboden und einem Gehäusemantel (34) ausgebildet ist.

5. Kamerasystem nach einem der vorstehenden Ansprüche, wobei der Gehäusegrundkörper 3 an seiner inneren Mantelfläche Auflager (30) mit Haltestiften (31) aufweist, zur Halterung und Fixierung zumindest einer Platine (7).

6. Kamerasystem nach einem der vorstehenden Ansprüche, zwei oder mehr Platinen (7) umfassend, welche mittels zwischen zwei Platinen (7) liegenden Abstandshaltern (33) angeordnet sind.

7. Kamerasystem nach Anspruch 6, wobei eine EMV-Schirmung durch zumindest einen Abstandshalter (33) ausgebildet ist.

8. Verfahren zur Herstellung eines Kamerasystems nach einem der vorstehenden Ansprüche, folgende Verfahrensschritte umfassend:
- Bereitstellen und Halten einer Sensoreinheit (1) nach einem der vorstehenden Ansprüche als erste Kameraeinheit mit einem Gehäusegrundkörper (3), in oder an welchem ein Bildsensor (5) und zumindest eine Platine (7) montiert sind,
- Bereitstellen und Halten einer Objektiveinheit (10) nach einem der vorstehenden Ansprüche als zweite Kameraeinheit mit einem Objektiv (12), einem Objektivhalter (14) sowie einem Gehäusedeckel (15)
- Ermittlung der Relativpositionen beider Kameraeinheiten (1, 10) zueinander, bei welchen die optischen Achsen (20, 21) von Objektiv (12) und Bildsensor (5) parallel ausgerichtet sind,
- Positionierung von Objektiveinheit (10) und der Sensoreinheit (1) relativ zueinander mit den zuvor ermittelten Positionsdaten mittels zumindest einer Mehr-Achs-Positioniervorrichtung, so dass sich beide Kameraeinheiten (1, 10) entlang einer Fügefläche (23) gegenüber liegen und dabei Objektiv (12) und Bildsensor (5) umhüllen, und nachfolgend
- Herstellung einer direkten Verbindung von Objektiveinheit (10) und Sensoreinheit (1) an der Fügefläche (23) durch Laserschweißen.

9. Verfahren nach Anspruch 8, wobei zur Ermittlung der Relativpositionen beider Kameraeinheiten (1, 10) zueinander folgende weitere Verfahrensschritte ausgeführt werden:
- Positionierung beider Kameraeinheiten (1, 10) in einem gemeinsamen oder zwei aufeinander beziehbaren Koordinatensystemen,
- Ergänzung zumindest einer Kameraeinheit (1, 10) mit einer zur Aufnahme eines Referenzmusters oder Referenzbildes, nachfolgend allgemein als Referenzaufnahme bezeichnet, erforderlichen Referenzkameraeinheit,
- Positionierung der Kameraeinheit (1, 10) relativ zur Referenzkameraeinheit mittels einer Mehr-Achs-Positioniervorrichtung zwecks Aufnahme einer Referenzaufnahme der Kameraeinheit (1, 10),
- Herstellung einer Referenzaufnahme für jede der zuvor positionierten Kameraeinheiten (1, 10) in einer vordefinierten Aufnahmequalität,
- Ermittlung der Relativpositionen beider Kameraeinheiten (1, 10), in welchen die zumindest eine Referenzaufnahme die definierte Aufnahmequalität aufweist.

10. Verfahren nach Anspruch 8, wobei die Relativpositionen beider Kameraeinheiten (1, 10) zueinander iterativ ermittelt wird, indem beide Kameraeinheiten (1, 10) temporär zueinander zwecks Herstellung einer Probeaufnahme positioniert werden und anhand der Aufnahmequalität der Probeaufnahme solange nachpositioniert werden, bis eine vordefinierte Aufnahmequalität erzielt wird.

11. Verfahren nach einem der Ansprüche 8 bis 10, wobei die Positionierung der Objektiveinheit (10) zum Referenzobjektiv (19) und der Sensoreinheit (1) zum Referenzbildsensor (18) mittels eines gemeinsamen Referenzsystems aufeinander bezogen sind.

12. Verfahren nach einem der Ansprüche 8 bis 11, wobei der für eine gewünschte Bildqualität erforderliche Abstand a zwischen dem Objektiv (12) und dem Bildsensor (5) des Kamerasystems berechnet oder durch Referenzaufnahmen ermittelt oder aktiv unter gleichzeitiger Messung der Bildschärfe der zu positionierenden Kameraeinheiten (1, 10) eingestellt wird.

13. Verfahren nach einem der Ansprüche 8 bis 12, wobei in die Positionierung von Sensoreinheit (1) und Objektiveinheit (10) auch die Ausrichtung in einer Ebene einbezogen wird, die parallel zur optisch aktiven Fläche (6) des Bildsensors (5) liegt.

14. Vorrichtung zur Ausführung des Verfahrens nach einem der Ansprüche 8 bis 13, folgende Komponenten umfassend:
- zumindest eine Mehr-Achs-Positioniervorrichtungen zur Halterung und Positionierung einer Sensoreinheit (1) und einer Objektiveinheit (10),
- ein Referenzsystem auf welches jede Mehr-Achs-Positioniervorrichtungen räumlich beziehbar ist,
- ein Referenzobjektiv (19) und/oder ein Referenzbildsensor (18),
- eine Steuervorrichtung zum Betrieb der zumindest einen Mehr-Achs-Positioniervorrichtung und zur Herstellung der Referenzaufnahmen und
- Mittel zum Laserschweißen von Objektiveinheit (10) nach einem der Ansprüche 1 bis 7 und Sensoreinheit (1) nach einem der Ansprüche 1 bis 7.

15. Vorrichtung nach Anspruch 14, wobei die Steuervorrichtung einen Speicher umfasst zur Speicherung der Relativpositionen von Sensoreinheit (1) und Objektiveinheit (10).

## Claims

1. Camera system for recording images of the environment of the camera system, which comprises the following components:
- two camera units, specifically a sensor unit (1) and a lens unit (10),
- wherein the sensor unit (1) comprises an image sensor (5), at least one circuit board (7) and a housing base body (3) as a first housing component,
- wherein the circuit board (7) has signal and supply lines (40) as well as electronic components (41) for operating the image sensor (5) and is electrically connected to the image sensor (5) and
- the image sensor (5) and the circuit board (7) are mounted in or on the housing base body (3),
- wherein the lens unit (10) comprises a lens (12) for imaging the environment on the image sensor (5), a lens holder (14) for receiving the lens and a housing cover (15) as a further housing component, and
- wherein the lens (12) is arranged in front of the image sensor (5) at a distance a therefrom and with parallel optical axes (20, 21) of the two constituent parts,
- wherein the two housing components are directly connected to one another on a joining surface (23) by laser welding and
- enclose the image sensor (5) and the lens (12) in such a way that the light used for the image recording impinges on the image sensor (5) only through the lens (12),
- wherein at least one of the two housing components is absorbent at least in the region of the joining surface (23) for the light used for the laser welding, subsequently referred to as laser-absorbent, and
- the second of the housing components is transparent at least in the region of the joining surface (23) for the light used for the laser welding, subsequently referred to as laser-transparent,
**characterized in that**
- the said second housing component is configured in multiple parts and comprises a joining and balancing element (25) as a separate constituent part, which is laser-transparent at least in the region of the joining surface (23), and the constituent parts of the second housing component are connected to one another.

2. Camera system according to Claim 1, wherein at least one of the two housing components comprises a joining and balancing element (25) for adjusting the distance between the lens (12) and the image sensor (5).

3. Camera system according to one of the preceding claims, wherein the housing cover (15) is configured in one piece or a plurality of pieces with the lens holder (14) .

4. Camera system according to one of the preceding claims, wherein the housing base body (3) is configured in one piece or a plurality of pieces with a housing bottom and a housing lateral surface (34).

5. Camera system according to one of the preceding claims, wherein the housing base body (3) has supports (30) with holding pins (31) on its inner lateral surface for holding and fixing at least one circuit board (7).

6. Camera system according to one of the preceding claims, comprising two or more circuit boards (7) which are arranged by means of spacers (33) lying between two circuit boards (7).

7. Camera system according to Claim 6, wherein an EMC screen is formed by at least one spacer (33).

8. Method for producing a camera system according to one of the preceding claims, comprising the following method steps:
- providing and holding a sensor unit (1) according to one of the preceding claims as a first camera unit with a housing base body (3), in or on which an image sensor (5) and at least one circuit board (7) are mounted,
- providing and holding a lens unit (10) according to one of the preceding claims as a second camera unit with a lens (12), a lens holder (14) and a housing cover (15),
- determining the relative positions of the two camera units (1, 10) with respect to one another in which the optical axes (20, 21) of the lens (12) and of the image sensor (5) are aligned parallel,
- positioning the lens unit (10) and the sensor unit (1) relative to one another with the previously determined position data by means of at least one multiaxial positioning device, so that the two camera units (1, 10) lie facing one another along a joining surface (23) while enclosing the lens (12) and the image sensor (5), and subsequently
- establishing a direct connection of the lens unit (10) and the sensor unit (1) on the joining surface (23) by laser welding.

9. Method according to Claim 8, wherein the following further method steps are carried out in order to determine the relative positions of the two camera units (1, 10) with respect to one another:
- positioning the two camera units (1, 10) in a common coordinate system or two coordinate systems which can be related to one another,
- supplementing at least one camera unit (1, 10) with a reference camera unit required for recording a reference pattern or reference image, subsequently referred to in general as a reference recording,
- positioning the camera unit (1, 10) relative to the reference camera unit by means of a multiaxial positioning device for the purpose of recording a reference recording of the camera unit (1, 10),
- producing a reference recording for each of the previously positioned camera units (1, 10) with a predefined recording quality,
- determining the relative positions of the two camera units (1, 10) in which the at least one reference recording has the defined recording quality.

10. Method according to Claim 8, wherein the relative positions of the two camera units (1, 10) with respect to one another are determined iteratively by temporarily positioning the two camera units (1, 10) with respect to one another for the purpose of producing a sample recording and repositioning them with the aid of the recording quality of the sample recording until a predefined recording quality is achieved.

11. Method according to one of Claims 8 to 10, wherein the positionings of the lens unit (10) with respect to the reference lens (19) and of the sensor unit (1) with respect to the reference image sensor (18) are related to one another by means of a common reference system.

12. Method according to one of Claims 8 to 11, wherein the distance a required for a desired image quality between the lens (12) and the image sensor (5) of the camera system is calculated or determined by reference recordings or actively adjusted while simultaneously measuring the image sharpness of the camera units (1, 10) to be positioned.

13. Method according to one of Claims 8 to 12, wherein the alignment in a plane which is parallel to the optically active surface (6) of the image sensor (5) is also incorporated into the positioning of the sensor unit (1) and the lens unit (10).

14. Device for carrying out the method according to one of Claims 8 to 13, comprising the following constituent parts:
- at least one multiaxial positioning device for holding and positioning a sensor unit (1) and a lens unit (10),
- a reference system to which each multiaxial positioning device can be spatially related,
- a reference lens (19) and/or a reference image sensor (18),
- a control device for operating the at least one multiaxial positioning device and for producing the reference recordings, and
- means for laser-welding the lens unit (10) according to one of Claims 1 to 7 and the sensor unit (1) according to one of Claims 1 to 7.

15. Device according to Claim 14, wherein the control device comprises a memory for storing the relative positions of the sensor unit (1) and the lens unit (10).

## Revendications

1. Système de caméras destiné à capturer des images de l'environnement du système de caméras qui comprend les composants suivants :
- deux unités formant caméra, à savoir une unité formant capteur (1) et une unité formant objectif (10),
- l'unité formant capteur (1) comprenant un capteur d'image (5), au moins une carte de circuit imprimé (7) et un corps de boîtier de base (3) comme premier composant de boîtier,
- la carte de circuit imprimé (7) comportant des lignes de signaux et d'alimentation (40) ainsi que des composants électroniques (41) destinés à faire fonctionner le capteur d'image (5) et étant reliée électriquement au capteur d'image (5) et
- des capteurs d'image (5) et la carte de circuit imprimé (7) étant montés dans ou sur le corps de boîtier de base (3),
- l'unité formant objectif (10) comprenant un objectif (12) destiné à reproduire l'environnement sur le capteur d'image (5), un support d'objectif (14) destiné à recevoir l'objectif et un couvercle de boîtier (15) comme autre composant de boîtier et
- l'objectif (12) étant disposé devant le capteur d'images (5) à une distance a de celui-ci et les axes optiques (20, 21) des deux composants étant parallèles,
- les deux composants de boîtier étant directement reliés l'un à l'autre au niveau d'une surface de jonction (23) par soudage laser et
- entourant le capteur d'images (5) et l'objectif (12) de telle sorte que la lumière utilisée pour la capture d'images n'est incident au capteur d'images (5) que via l'objectif (12),
- l'un au moins des deux composants de boîtier étant, au moins dans la zone de la surface de jonction (23), absorbant vis-à-vis de la lumière utilisée pour le soudage laser, et désigné ci-après par laser-absorbant, et
- le deuxième des composants de boîtier étant, au moins dans la zone de la surface de jonction (23), transparente vis-à-vis de la lumière utilisée pour le soudage laser, et désigné ci-après par laser-transparent,
**caractérisé en ce que**
ledit deuxième composant de boîtier est formé de plusieurs éléments constitutifs et comprend comme élément constitutif un élément de jonction et de compensation (25) qui est laser-transparent au moins dans la zone de la surface de jonction (23) et les éléments constitutifs du deuxième composant de boîtier sont reliés les uns aux autres.

2. Système de caméras selon la revendication 1, l'un au moins des deux composants de boîtier comportant un élément de jonction et de compensation (25) destiné à régler la distance entre l'objectif (12) et le capteur d'images (5).

3. Système de caméras selon l'une des revendications précédentes, le couvercle de boîtier (15) étant formé d'une seule partie ou de plusieurs parties avec le porte-objectif (14).

4. Système de caméras selon l'une des revendications précédentes, le corps de boîtier de base (3) étant formé d'une seule partie ou de plusieurs parties avec un fond de boîtier et une enveloppe de boîtier (34).

5. Système de caméras selon l'une des revendications précédentes, le corps de boîtier de base 3 comportant des supports (30) munis sur sa surface latérale interne de tiges de retenue (31) destinées à maintenir et fixer au moins une carte de circuit imprimé (7).

6. Système de caméras selon l'une des revendications précédentes, comprenant deux ou plusieurs cartes de circuit imprimé (7) qui sont disposées au moyen d'entretoises (33) situées entre deux cartes de circuit imprimé (7).

7. Système de caméras selon la revendication 6, un blindage électromagnétique étant formé par au moins une entretoise (33).

8. Procédé de réalisation d'un système de caméras selon l'une des revendications précédentes, ledit procédé comprenant les étapes suivantes :
- fournir et maintenir une unité formant capteur (1) selon l'une des revendications précédentes comme première unité formant caméra munie d'un corps de boîtier de base (3) dans ou sur lequel un capteur d'image (5) et au moins une carte de circuit imprimé (7) sont montés,
- fournir et maintenir une unité formant objectif (10) selon l'une des revendications précédentes comme deuxième unité formant caméra munie d'un objectif (12), d'un support d'objectif (14) et d'un couvercle de boîtier (15),
- déterminer des positions relatives des deux unités formant caméras (1, 10) l'une par rapport à l'autre, dans lesquelles les axes optiques (20, 21) de l'objectif (12) et du capteur d'images (5) sont orientés en parallèle,
- positionner l'unité formant objectif (10) et l'unité formant capteur (1) l'une par rapport à l'autre avec les données de position préalablement déterminées au moyen d'au moins un dispositif de positionnement multiaxes de sorte que les deux unités formant caméras (1, 10) soient opposées l'une à l'autre le long d'une surface de jonction (23) et enveloppent ainsi un objectif (12) et des capteurs d'images (5), et ensuite
- réaliser une liaison directe entre l'unité formant objectif (10) et l'unité formant capteur (1) sur la surface de jonction (23) par soudage laser.

9. Procédé selon la revendication 8, les étapes de procédé supplémentaires suivantes du procédé étant réalisées pour déterminer les positions relatives des deux unités formant caméras (1, 10) l'une par rapport à l'autre :
- positionner les deux unités formant caméras (1, 10) dans un système de coordonnées commun ou deux systèmes de coordonnées pouvant se rapporter l'une à l'autre,
- compléter au moins une unité formant caméra (1, 10) d'une unité formant caméra de référence nécessaire à la capture d'un motif de référence ou d'une image de référence, désignée ci-après d'une façon générale par capture de référence,
- positionner l'unité formant caméra (1, 10) par rapport à l'unité formant caméra de référence au moyen d'un dispositif de positionnement multiaxes afin d'effectuer une capture de référence de l'unité formant caméra (1, 10),
- effectuer une capture de référence pour chacune des unités formant caméras préalablement positionnées (1, 10) dans une qualité de capture prédéfinie,
- déterminer des positions relatives des deux unités formant caméras (1, 10) dans lesquelles l'au moins une capture de référence présente la qualité de capture définie.

10. Procédé selon la revendication 8, les positions relatives des deux unités formant caméras (1, 10) l'une par rapport à l'autre étant déterminée de manière itérative du fait que les deux unités formant caméras (1, 10) sont temporairement positionnées l'une par rapport à l'autre afin d'effectuer une capture d'essai et repositionnées sur la base de la qualité de capture de la capture d'essai jusqu'à ce qu'une qualité de capture prédéfinie soit atteinte.

11. Procédé selon l'une des revendications 8 à 10, le positionnement de l'unité formant objectif (10) par rapport à l'objectif de référence (19) et le positionnement de l'unité formant capteur (1) par rapport au capteur d'image de référence (18) étant rapportés l'un à l'autre au moyen d'un système de référence commun.

12. Procédé selon l'une des revendications 8 à 11, la distance a nécessaire à une qualité d'image souhaitée entre l'objectif (12) et le capteur d'image (5) du système de caméras étant calculée ou déterminée par des captures de référence ou réglée activement par une mesure simultanée de la netteté d'image des unités formant caméras (1, 10) à positionner.

13. Procédé selon l'une des revendications 8 à 12, le positionnement de l'unité formant capteur (1) et de l'unité formant objectif (10) incluant également l'orientation dans un plan qui est parallèle à la surface (6) optiquement active du capteur d'images (5).

14. Dispositif de mise en œuvre du procédé selon l'une des revendications 8 à 13, ledit dispositif comprenant les éléments constitutifs suivants :
- au moins un dispositif de positionnement multiaxe destiné à maintenir et positionner une unité formant capteur (1) et une unité formant objectif (10),
- un système de référence auquel chaque dispositif de positionnement multiaxe peut se rapporter spatialement,
- un objectif de référence (19) et/ou un capteur d'images de référence (18),
- un dispositif de commande destiné à faire fonctionner l'au moins un dispositif de positionnement multiaxes et à effectuer les captures de référence et
- des moyens destinés à souder au laser l'unité formant objectif (10) selon l'une des revendications 1 à 7 et l'unité formant capteur (1) selon l'une des revendications 1 à 7.

15. Dispositif selon la revendication 14, le dispositif de commande comprenant une mémoire destinée à mémoriser les positions relatives de l'unité formant capteur (1) et de l'unité formant objectif (10).
